# EUROPEAN PATENT SPECIFICATION

(11) **EP 1 905 587 B1**
(45) Date of publication and mention of the grant of the patent: **03.03.2010**
(21) Application number: 07117402.3
(22) Date of filing: 27.09.2007
(51) Int. Cl.: B32B 27/34, B29C 55/14, B32B 27/08

(54) **Biaxially stretched, multi-layered polyamide film and production method thereof**
Biaxial gestreckte mehrschichtige Polyamidfolie und Herstellungsverfahren dafür
Film polyamide multicouche étiré biaxialement et son procédé de fabrication

(30) Priority: 28.09.2006 JP 2006264355; 28.09.2006 JP 2006264356; 28.09.2006 JP 2006264357; 28.09.2006 JP 2006264358; 16.10.2006 JP 2006281264
(43) Date of publication of application: 02.04.2008
(73) Proprietor: Mitsubishi Gas Chemical Company, Inc., Chiyoda-ku Tokyo (JP)
(72) Inventor: Nanba, Hiroyuki c/o Mitsubishi Gas Chem.Company, Inc., Hiratsuka-shi, Kanagawa (JP); Kouno, Kenji c/o Mitsubishi Gas Chem.Company, Inc., Hiratsuka-shi, Kanagawa (JP); Takahashi, Makoto c/o Mitsubishi Gas Chem.Company, Inc., Hiratsuka-shi, Kanagawa (JP)
(74) Representative: Gille Hrabal Struck Neidlein Prop Roos

(56) References cited:
- EP-A- 0 540 293
- EP-A- 0 714 763
- EP-A- 0 960 903
- EP-A- 1 018 424
- EP-A- 1 179 416
- WO-A-2005/072962
- JP-A- 2002 103 446
- JP-A- 2005 212 389
- DATABASE WPI Week 198218 Derwent Publications Ltd., London, GB; AN 1982-36204E XP002462599 & JP 57 051427 A (TOYOBO KK) 26 March 1982 (1982-03-26)

## Description

### BACKGROUND OF THE INVENTION

### 1. Field of the Invention

The present invention relates to biaxially stretched, multi-layered polyamide films excellent in the flexibility, impact resistance, pinhole resistance, transparency, and gas barrier properties which are resistant to a boiling or retort treatment, and also relates to a production method thereof.

### 2. Description of the Prior Art

As gas-barrier packaging materials, multi-layered films having a gas-barrier layer made of polyvinylidene chloride (PVDC), ethylene-vinyl alcohol copolymer (EVOH) or polyamide have been used. As compared with other known gas-barrier resins, a polyamide containing m-xylylenediamine units produced by the polycondensation of m-xylylenediamine and an α,ω-aliphatic dicarboxylic acid having 6 to 12 carbon atoms is less reduced in the gas barrier properties and restores the gas barrier properties quickly when subjected to a boil treatment or retort treatment. Particularly, poly(m-xylylene adipamide) (may be referred to as "nylon MXD6") produced by using adipic acid as the α,ω-aliphatic dicarboxylic acid having 6 to 12 carbon atoms has come to be widely used in the packaging field because of its excellence in such features.

Anon-stretched nylon MXD6 has drawbacks of being low in the impact resistance, flexibility, and pinhole resistance, which can be improved to some extent by the stretching. However, a sufficient improvement cannot be obtained when nylon MXD6 is solely used. Therefore, there has been proposed a method in which two different polyamides are separately melt-extruded and made into a biaxially stretched laminate film by inflation (JP 57-51427A). In addition, a laminate film including layers each being mainly made of an aliphatic polyamide and an interposed layer mainly made of an aromatic polyamide is proposed (JP 56-155762A).

To produce the films made of two different polyamides, it is proposed to improve the properties by the addition of additives (JP 7-117198A, JP 7-276591A, Japanese Patents 3021851, 2666663, 3021854, 3074883, 3136789, and 3395474). However, since the glass transition temperatures of the nylon MXD6 and the aliphatic polyamide are different from each other, the optimum stretching conditions for respective polymers are also different from each other, thereby making the stretching of the multi-layered structure made of two different polyamides difficult. Particularly, in the longitudinal roll stretching of a film having a layered structure of aliphatic polyamide/nylon MXD6/aliphatic polyamide, the resin constituting the aliphatic polyamide layer adheres to the roll at temperatures of 80 °C or more at which the nylon MXD6 layer can be stretched, thereby causing a poor appearance and a trouble of wrapping over roll. In addition, the film width varies after the longitudinal stretching to cause the failure of clipping the film with a chuck in the next transverse stretching or increase the thickness unevenness of the obtained film, thereby making a stable production for a long period of time difficult.

The proposed method mentioned above are sufficient for improving the mechanical properties to some extent, but insufficient for improving the pinhole resistance. Since the crystallization speed of the aromatic polyamide such as nylon MXD6 is low, a sufficient heat set cannot be attained when the film is produced by the known production conditions for aliphatic polyamide films, to increase the shrinkage upon retort treatment.

In the production of biaxially stretched laminate films from two different polyamides, a mixture of such polyamides is inevitably by-produced. For example, off-specification films are formed from the start of the production until reaching a stable operation for producing on-specification films. Even after reaching the stable operation, small cuttings called as edge trims are by-produced. The off-specification films and edge trims are made of a mixture of the different polyamides. Therefore, even when separately recovered for reuse, a biaxially stretched laminate film having a quality comparable to that of the films produced from virgin materials is difficult to produce when off specification films and edge trims are reused. If the scraps are wasted, the yield is reduced to increase the production costs. To prevent the deterioration of the properties due to the reuse of the off-specification films, edge trims, etc., there has been proposed to use additives (JP 7-117198A, JP 7-276591A, Japanese Patents 3021851, 2666663, 3021854, 3074883, 3136789, and 3395474 each being mentioned above). However, the barrier properties are not improved by the proposed methods. A method for effectively improving the barrier properties when reusing the edge trims, etc. has not yet been proposed.

### SUMMARY OF THE INVENTION

In view of these circumstances, an object of the present invention is to provide a biaxially stretched, multi-layered polyamide film which is excellent in the gas barrier properties, pinhole resistance, flexibility, and impact resistance.

Another object is to provide a method of producing a biaxially stretched, multi-layered polyamide film, which is free from the adhesion of films to rolls during the stretching operation, to enable a stable production.

A still another object is to provide a biaxially stretched, multi-layered polyamide film little suffering from the variation in film width and thickness unevenness.

A still another object is to provide a biaxially stretched, multi-layered polyamide film little shrinking upon retort treatment.

A still another object is to produce a biaxially stretched, multi-layered polyamide film, without reducing the properties inclusive of the gas barrier properties even when reusing the scraps such as off-specification films and edge trims which are by-produced from a mixture of the starting polyamides in the production of the biaxially stretched, multi-layered polyamide film.

The inventors have found that the film is prevented from adhering to or wrapping around a roll for longitudinal stretching by regulating the temperature of a roll for cooling a non-stretched laminate film within a limited range, thereby enabling a stable production of a biaxially stretched, multi-layered polyamide film composed of a layer mainly made of nylon MXD6 and a layer mainly made of an aliphatic polyamide resin. It has been further found that the variation of film width and the thickness unevenness after longitudinal stretching are minimized by regulating the temperature of the roll for longitudinal stretching, the temperature of the cooling roll after longitudinal stretching and the transverse stretching temperature within limited ranges. It has been still further found that the number of pinholes generated in Gelbo test is extremely decreased and the shrinkage upon retort treatment is lowered by regulating the temperature of the roll for longitudinal stretching, the longitudinal stretching ratio, the transverse stretching temperature, the transverse stretching ratio, and the heat setting temperature within limited ranges. It has been still further found that the adhesion or wrapping of films to or around the roll is effectively prevented by using a satin-finished roll or ceramic-sprayed roll in the longitudinal stretching. It has been still further found that the adhesion or wrapping of films to or around the roll is more effectively prevented by conducting the heating in the longitudinal stretching in a non-contacting manner.

The inventors have further studied on the barrier properties and mechanical properties of a mixture of an m-xylylenediamine unit-containing polyamide and aliphatic polyamide. As a result, it has been found that both the resins cause an amide-exchanging reaction after repeated heating and melting to become compatible with each other, thereby rapidly decreasing the mechanical properties, gas barrier properties, and the transparency after boiling or retort treatment, when the content of the m-xylylonediamine unit-containing polyamide in the mixture exceeds 50% by weight. It has been found that the decrease in the properties attributable to the compatibilization hardly occurs when the content of the m-xylylezxediamine unit-containing polyamide in the mixture is 50% by weight or less. The present invention is based on these findings.

Thus, the present invention relates to a method of producing a biaxially stretched, multi-layered polyamide film, which includes a step of cooling a non-stretched laminate film having a layer A mainly composed of a polyamide resin X and a layer B mainly composed of an aliphatic polyamide resin Y on a cast roll at 30 to 60 °C, the polyamide resin X being composed of a diamine constitutional unit containing 70 mol % or more of m-xylylenediamine units and a dicarboxylic acid constitutional unit containing 70 mol % or more of units derived from an α,ω-aliphatic dicarboxylic acid having 6 to 12 carbon atoms; and a step of a successive biaxial stretching in which the cooled non-stretched laminate film is longitudinally stretched by a roll of 80 to 110 °C and then transversely tenter-stretched at 80 to 160 °C.

The present invention further relates to a biaxially stretched, multi-layered polyamide film produced by the method described above.

The method of the invention enables the stable production of the biaxially stretched, multi-layered polyamide film which is excellent in the transparency, impact resistance, pinhole resistance, and gas barrier properties and exhibits a small shrinkage upon boiling or retort treatment. The biaxially stretched, multi-layered polyamide film is useful as the packaging material for foods, medicines, industrial chemicals, cosmetics and inks. Since the gas barrier properties and pinhole resistance are particularly excellent, the biaxially stretched, multi-layered polyamide film has a good food preservability and is suitably used as food packaging materials.

### DETAILED DESCRIPTION OF THE INVENTION

The biaxially stretched, multi-layered polyamide film of the invention includes at least one layer A which is mainly made of a polyamide resin X and at least one layer B which is mainly made of an aliphatic polyamide resin Y. Examples of the layered structure include, but not limited to, B/A/B, B/A, B/A/B/A/B, and B/A/B/A, with B/A/B being preferred because of its practical applicability.

In another embodiment of the present invention, the layer B contains a scrap which is by-produced in the production of films, in addition to the aliphatic polyamide resin Y If necessary, the biaxially stretched, multi-layered polyamide film may further include a layer C which is made of the aliphatic polyamide resin Y. Examples of the layered structure include, but not limited to, B/A/B, B/A/C, B/C/A, B/A/B/A/B, C/A/B/A/C, and C/A/B/A/B, with B/A/B being preferred because of its practical applicability.

In the polyamide resin X, 70 mol % or more (inclusive of 100 mol %) of the diamine constitutional unit are m-xylylenediamine units, and 70 mol % or more (inclusive of 100 mol %) of the dicarboxylic acid constitutional unit are units derived from α,ω-aliphatic dicarboxylic acid unit having 6 to 12 carbon atoms. The polyamide resin X is produced, for example, by the polycondensation of a diamine component containing 70 mol % or more of m-xylylenediamine and a dicarboxylic acid component containing 70 mol % or more of α,ω-aliphatic dicarboxylic acid having 6 to 12 carbon atoms. The content of the m-xylylenediamine units is preferably 90 mol % or more and more preferably 100 mol %. Within the above range, the gas barrier properties are maintained at intended level. The content of the units derived from the α,ω-aliphatic dicarboxylic acid having 6 to 12 carbon atoms is preferably 70 mol % or more and more preferably from 80 to 100 mol %.

Examples of diamine other than m-xylylenediamine include p-xylylenediamine, o-xylylenediamine, bis(aminomethyl)cyclohexane, tetramethylenediamine, pentamethylenediamine, hexamethylenediamine, heptamethylenediamine, octamethylenediamine, nonamethylenediamine, o-phenylenediamine, m-phenylenediamine, and p-phenylenediamine. These diamines may be used alone or in combination of two or more.

When the content of the units derived from the α,ω-aliphatic dicarboxylic acid having 6 to 12 carbon atoms in the dicarboxylic acid constitutional unit is 70 mol % or more, the polyamide resin X acquires practically applicable properties. Examples of the α,ω-aliphatic dicarboxylic acid having 6 to 12 carbon atoms include adipic acid and sebacic acid. These dicarboxylic acids may be used alone or in combination of two or more. In view of the gas barrier properties of the polyamide resin X, preferred is adipic acid. Examples of dicarboxylic acid other than the α,ω-aliphatic dicarboxylic acid having 6 to 12 carbon atoms include aromatic dicarboxylic acid such as isophthalic acid and terephthalic acid.

The aliphatic polyamide resin Y may be any of chain polyamides such as homopolymer of ε-caprolactam, poly(hexamethylene adipamide), copolymers containing ε-caprolactam or hexamethylene adipamide as the main component and 2 to 10 mol % of monomer copolymerizable with the main component. Examples of the copolymerizable monomer include nylon salts of aliphatic diamines and aliphatic dicarboxylic acids. Examples of the aliphatic diamines include ethylenediamine, tetramethylenediamine, pentamethylenediamine, hexamethylenediamine, octamethylenediamine, and decamethylenediamine. Examples of the aliphatic dicarboxylic acids include adipic acid, sebacic acid, suberic acid, glutaric acid, azelaic acid, β-methyladipic acid, decamethylenedicarboxylic acid, dodecamethylenedicarboxylic acid, and pimelic acid. Preferred are nylon 6 and nylon 66 because these polymers are available in low costs and facilitate the biaxial stretching. Also usable is nylon 6,66 which is a copolymer of these polymers.

In the present invention, the scraps of films may be reused as the material for each layer, particularly, for the layer B. In the present invention, the rejected films and their pieces removed or by-produced in the production of films are collectively referred to as "scraps." The stretching using a tenter is generally conducted by a successive stretching method in which a film longitudinally stretched by using a roll is then transversely stretched with its margins being held with chucks or clips. Since the portion held with chuck and its vicinities are not stretched, and therefore unsatisfactory as the final products, the non-stretched portion is generally trimmed by a slitter. In the simultaneous biaxial stretching, a film is simultaneously and biaxially stretched with its margins being held with chucks or clips. In this case, also, the non-stretched portion, i.e., the portion held with chuck and its vicinities, is unsatisfactory as the final products and generally trimmed by a slitter. In the present invention, these edge trims may be reused as the material for each layer, particularly, for the layer B. In the production of stretched films, the production speed is first low and then gradually increased to reach a stable production speed. The films produced before reaching the stable production speed are rejected because being unsatisfactory as the final products and reused as the raw material. The films as-obtained from a production machine are generally slit into a width suitable for printing and laminating. According to the width of the machine for printing or laminating and the width of the final films, slit films which do not fit the machine for printing or laminating are necessarily left. These slit films may be also reused. If the longitudinal stretching step or transverse stretching step does not work properly, the films are wound out in the previous step. The films thus wound out may be also reused. In addition, the resins purged from an extruder when starting the extruding may be also reused.

The polyamide resin X, aliphatic polyamide resin Y, and resultant biaxially stretched, multi-layered polyamide film are all highly moisture-absorptive. If scraps containing moisture are reused, water vapor and oligomers are generated during the extrusion of the raw material melted under heating, to prevent a proper film formation. Therefore, it is recommended to store or transport the scraps in dry air or nitrogen so as to prevent the moisture absorption, or to dry the scraps before use to reduce the water content to 0.5 % by weight or less.

If the content of the m-xylylenediamina unit-containing polyamide in the layer B containing the scraps exceeds 50 % by weight, the amide-exchanging reaction between the polyamide resin X and the aliphatic polyamide resin Y occurs when being repeatedly heated and melted and these polymers become compatible to each other. As a result, the transparency is unfavorably decreased rapidly after the boiling or retort treatment. To prevent the decrease in the properties due to the compatibilization, the content of the m-xylylenediamine unit-containing polyamide in the layer B is preferably 50 % by weight or less.

Even when the content of the m-xylylenediamine unit-containing polyamide in the layer B exceeds 50 % by weight, the properties are not so decreased at the stages immediately after starting the reuse, because the scraps are subject to the heat history only once. However, the reused scraps are subject to the heat history many times during the continued production, to allow the compatibilization to proceed and reduce the properties. When the content of the m-xylylenediamine unit-containing polyamide in the layer B is 50 % by weight or less, the compatibilization is prevented from proceeding even if the reused scraps are repeatedly subject to the heat history, thereby substantially preventing the reduction of the properties. Thus, since the properties are not reduced in the continued production, the biaxially stretched, multi-layered polyamide films having uniform quality are stably produced.

The scraps are preferably crashed into fine powders, granulated into pellets by compression, or melt-extruded into pellets, because the shapes of scraps are not suitable for feeding them directly into an extruder in some cases. In view of a stable feeding into the extruder and a stable extrusion, the pelletization by melt extrusion is particularly preferred.

The pelletization by melt extrusion is conducted by crashing the scraps, feeding the crashed scraps into a hopper of a single- or twin-screwed extruder, melt-extruding the scraps into strands, and cutting the strands into pellets by a pelletizer. It is recommended to conduct the pelletization in vacuum so as to remove water by using a vented extruder. To prevent the compatibilization between both polymers, the extrusion temperature is preferably 270 °C or less and the residence time is preferably 10 min or less. When the extrusion temperature and residence time are within the above ranges, the compatibilization between both polymers is effectively prevented, thereby ensuring good mechanical properties, pinhole resistance, impact resistance, and transparency after heat treatment.

The total thickness of the biaxially stretched, multi-layered polyamide film is preferably from 10 to 40 µm. Within the above range, the oxygen gas barrier properties and the flex pinhole resistance are well balanced and a good wear resistance is achieved, thereby enabling the production of films suitable for packaging materials. In addition, the hardness of films is appropriate. Since the film is not so bulky when laminated with an optional sealant layer, the laminate film is suitably used for light-duty packaging.

The thickness of the layer A (total when including two or more layers A) in the biaxially stretched, multi-layered polyamide film, which is mainly made of the polyamide resin X, is preferably from 3 to 20 µm. Within the above range, the oxygen permeability of the biaxially stretched, multi-layered polyamide film is regulated within a range from 20 to 150 ml/(m²·day·MPa). In addition, the pinhole resistance, impact resistance, and flexibility are good.

The thickness of the layer B (total when including two or more layers B) in the biaxially stretched, multi-layered polyamide film, which is mainly made of the aliphatic polyamide resin Y, is preferably from 5 to 60 µm.

The thickness unevenness of the biaxially stretched, multi-layered polyamide film (maximum thickness - minimum thickness) is preferably 2 µm or less. Within the above range, since the films are free from production defects such as meandering and wrinkling in the printing step, the product values are not deteriorated. Also, since the production defects such as meandering and wrinkling are prevented when laminating a printed or non-printed film with a sealant, the product values are not deteriorated.

The layer A and layer B may be included with an impact resistance improver for improving the impact resistance, pinhole resistance, and flexibility. Examples of the impact resistance improver include polyolefin, polyamide elastomer, hydrogenated styrene-butadiene copolymer, ionomer, ethylene-ethyl acrylate copolymer, maleic anhydride-modified ethylene-ethyl acrylate copolymer, ethylene-methacrylic acid copolymer, nylon 12, ethylene-propylene copolymer elastomer, and polyester elastomer. The addition amount of the impact resistance improver is preferably from 1 to 10 % by weight, more preferably from 1 to 5 % by weight, and still more preferably from 2 to 3 % by weight, based on the weight of each layer. Within the above range, the transparency and gas barrier properties are good, and the impact resistance, pinhole resistance, and flexibility are effectively improved.

The layer A and layer B may be included with additives such as lubricant, antistatic agent, antioxidant, antiblocking agent, stabilizer, dye, pigment, inorganic fine powder, and clay mineral in amounts not adversely affecting the effects of the invention.

The biaxially stretched, multi-layered polyamide film may be laminated with a thermoplastic resin layer. Examples of the thermoplastic resin include low density polyethylene, high density polyethylene, linear low density polyethylene, polypropylene, polybutene, copolymers thereof, ionomer resin, ethylene-acrylic acid copolymer, ethylene-vinyl acetate copolymer, modified polyolefin, and mixtures thereof, with low density polyethylene, high density polyethylene, linear low density polyethylene, and polypropylene being preferred.

The biaxially stretched, multi-layered polyamide film is produced by the following method.

First, the starting polyamide resin X and aliphatic polyamide resin Y are made into a non-stretched laminate film which is substantially amorphous and not oriented. When using the scraps, the biaxially stretched, multi-layered polyamide film is first produced from the polyamide resin X and aliphatic polyamide resin Y and then the scraps such as edge trims are collected. Then, the scraps are crashed, melted and made into pellets to obtain recycled pellets. Next, in the same manner as described above except for blending the recycled pellets to the aliphatic polyamide resin Y, a non-stretched laminate film is produced. The thickness of the non-stretched laminate film is preferably from 60 to 1000 µm, although depending upon the application of the final film and the stretching ratios. In a coextrusion method, the raw materials are separately melted in 2 to 3 extruders, coextruded from a flat die or circular die, and then cooled on a cast roll, to obtain a flat or circular non-stretched laminate film. The temperature of the cast roll for cooling is from 20 to 60°C, preferably from 30 to 60 °C. Within the above range, the adhesion or wrapping of films to or around a roll during the subsequent longitudinal stretching by using the roll is prevented, to ensure a stable production without causing the poor appearance and the reduction in the properties. In addition, since the crystallization of the polyamide resins are prevented, the defective stretching and whitening do not occur in the subsequent longitudinal stretching by a roll.

The non-stretched laminate film is then stretched in the longitudinal direction (machine direction) by 2.5 to 5 times the original length by a roll of 80 to 110 °C. When the roll temperature is within the above range, the film is sufficiently heated to prevent the occurrence of breaking and poor appearance due to defective stretching. In addition, since the crystallization does not occur, the defective stretching and the whitening are prevented. When the longitudinal stretching ratio is within the above range, the mechanical properties and pinhole resistance are good, and the breaking, whitening and poor appearance do not occur. To improve the pinhole resistance more effectively, it is preferred to longitudinally stretch by 3.0 to 3.3 times using a roll of 80 to 100°C. To make the shrinkage upon retort treatment still smaller, it is preferred to longitudinally stretch by 2.5 to 3.5 times using a roll of 80 to 100 °C.

In the longitudinal stretching, the non-stretched laminate film is preheated preferably in a non-contacting heating manner and then stretched. The non-contacting heating is performed by using an infrared heater, a near-infrared heater or a ceramic heater. Alternatively, air heated by an electric heater may be blown against the film by using a blower. The rolls which are disposed upstream or downstream the heater may be a known hard chromium-plated roll or a known mirror-finished roll. To prevent the adhesion of films, a satin-finished roll or ceramic-sprayed roll described below is preferably used.

It is preferred to use a satin-finished roll or ceramic-sprayed roll in the longitudinal stretching. Since the satin-finished roll has fine protrusions and recesses on its surface, the contact surface between the film and roll is reduced, thereby preventing the adhesion of the film to the roll. By the ceramic-spraying, the surface of the roll is modified and made adhesion preventive. The polyamide resins easily adhere to some types of hard chromium-plated roll and mirror-finished roll. If the adhesion and peeling off are repeated, the appearance of films becomes poor and the film thickness is made uneven. In some cases, the film heavily wraps around the roll to discontinue the production.

The longitudinal stretching is conducted preferably by passing the film between an upstream heating roll rotating a relatively low speed and a nip roll made of rubber, and then passing the film between a downstream cooling roll rotating a relatively high speed and a nip roll made of rubber. The film is longitudinally stretched by a stretching ratio which is determined by the difference between the numbers of rotation. The temperature of the highspeed cooling roll is kept at from 40 to 80 °C. Within the above range, the variation in film width after longitudinal stretching is prevented and the film is easily held with a chuck in the next transverse stretching to ensure proper transverse stretching. In addition, the adhesion or wrapping of films to or around the cooling roll is prevented, to avoid the troubles such as poor appearance and breaking.

The longitudinally stretched film is successively stretched in the transverse direction at 80 to 160 °C by 2.5 to 5 times the original length by a tenter transverse stretching machine. When the transverse stretching temperature is within the above range, the film is sufficiently heated to avoid the breaking and poor appearance due to defective stretching. In addition, since the crystallization does not occur, the defective stretching and the whitening are prevented. When the transverse stretching ratio is within the above range, the mechanical properties and pinhole resistance are good, and the breaking, whitening and poor appearance do not occur. To improve the pinhole resistance more effectively, it is preferred to transversely stretch at 80 to 120 °C by 3.6 to 4.2 times. To make the shrinkage upon retort treatment still smaller, it is preferred to transversely stretch at 80 to 140 °C by 3.0 to 4.0 times.

The stretched film thus obtained is then preferably subject to a heat treatment (heat setting). By the heat treatment, the dimension stability of the stretched film is made good. The heat treatment is conducted preferably at from 110 to MP - 5 °C wherein MP is the lowest melting point of the constituting resins), more preferably at from 210 to 220 °C preferably for 4 to 10 s. By the heat treatment under the above conditions, the dimension stability is improved and simultaneously the shrinkage upon boiling or retort treatment is reduced. To improve the pinhole resistance more effectively and make the shrinkage upon boiling or retort treatment smaller, the heat treatment is conducted preferably at 210 to 220 °C for 4 to 10 s.

By the production method described above, the number of pinholes formed is controlled preferably within a range of 2/624 cm² or less when measured by Gelbo test (number of flex: 1000) which will be described below. To effectively produce such a biaxially stretched, multi-layered polyamide film which is resistant to the pinhole formation, the following production conditions are preferred:
temperature of cast roll: from 20 to 60 °C,
temperature of heating roll for longitudinal stretching: from 80 to 100 °C,
longitudinal stretching ratio: from 3.0 to 3.3 times,
transverse stretching temperature: from 80 to 120 °C,
transverse stretching ratio: from 3.6 to 4.2 times,
heat treating temperature: from 210 to 220 °C, and
heat treating time: from 4 to 10 s.

By the production method described above, each of the shrinkages in the longitudinal direction and transverse direction is controlled preferably within a range of 3 to 8% when retort-treated at 121 °C for 30 min. To effectively produce such a biaxially stretched, multi-layered polyamide film which is resistant to shrinkage upon retort treatment, the following production conditions are preferred:
temperature of cast roll: from 20 to 60 °C,
temperature of heating roll for longitudinal stretching: from 80 to 100 °C,
longitudinal stretching ratio: from 2.5 to 3.5 times,
transverse stretching temperature: from 80 to 140 °C,
transverse stretching ratio: from 3.0 to 4.0 times,
heat treating temperature: from 210 to 220 °C, and
heat treating time: from 4 to 10 s.

The present invention will be described in more detail with reference to the following examples, reference examples and comparative examples. The materials, their amounts of use, their contents, treatments, methods of treatments, etc. given in the following examples can be varied without departing from the spirit and scope of the invention. Therefore, it should be noted that the scope of the invention is not limited to the examples described below.

The measurements and evaluations given below were made by the following methods.

### (1) Haze value

Measured according to ASTM D1003 at 23 °C and relative humidity of 60% using a color difference turbidimeter "COH-300A" manufactured by Nippon Denshoku Industries Co., Ltd. In the same manner, the haze values after the retort treatment at 121 °C for 30 min were measured.

### (2) Oxygen permeability

Measured according to ASTM D3985 at 23 °C and relative humidity of 60% using an oxygen permeability tester "OX-TRAN 10/50A" manufactured by Modern Controls, Inc.

### (3) Impact puncture strength

Measured according to ASTM D781 at 23 °C and relative humidity of 50% using a film impact tester "ITF-60" manufactured by Tosoku Seimitsu Kogyo, Co., Ltd.

### (4) Flexibility test (pinhole resistance test)

A sample film was flexed predetermined times (500 or 1000 times) at 23 °C and relative humidity of 50% using Gelbo flex tester manufactured by Rigaku Kogyo Co., Ltd. Thereafter, the number of pinholes per 624 cm² was counted using a pinhole tester.

### (5) Tensile strength

Measured according to ASTM D882 at 23 °C and relative humidity of 50% using Strograph VI-C manufactured by Toyo Seiki Seisaku-Sho, Ltd.

### (6) Thickness

The thickness of each layer in a biaxially stretched, multi-layered polyamide film was measured using a thickness measurement system for multi-layered film "DC-8200" manufactured by Gunze Limited.

### (7) Shrinkage by retort treatment

On a biaxially stretched, multi-layered polyamide film, a 10 cm × 10 cm square was drawn using a permanent felt-tipped pen. The film was then retorted at 121 °C for 30 min. Thereafter the length of the side of the square was measured in each of the machine direction and the transverse direction. The shrinkage in each direction was calculated from the change in the length between before and after the retort treatment.

### (8) Appearance

A biaxially stretched, multi-layered polyamide film was visually observed for peal marks which were caused when adhered films were pealed off. When not observed, the appearance was rated "good," and rated "poor" when observed.

### EXAMPLE 1

In three 65 mmφ extruders, nylon MXD6 (polyamide resin X, "MX Nylon 6011" (trade mark) manufactured by Mitsubishi Gas Chemical Company, Inc., diamine constitutional unit = m-xylylenediamine unit, dicarboxylic acid constitutional unit = adipic acid unit) and poly(ε-caproamide) (aliphatic polyamide resin Y, "Ube Nylon 1022FDX04 manufactured by Ube Industries, Ltd.) were separately melted, laminated in T-die and then extruded into a three-layered laminate film (Y/X/Y(B/A/B)). The laminate film was brought into close contact with a cast roll of 30 °C for quenching by using a pinning device, to obtain a multi-layered raw film (non-stretched laminate film) of Y/X/Y = 50/50/50 µm. The non-stretched laminate film was longitudinally stretched by 3 times by a roll of 85 °C using a roll stretching machine. After holding the film at its edges with a tenter clip, the film was transversely stretched by 3.3 times at 100 to 120 °C in a tenter oven. Thereafter, the film was heat-set at 215 °C for 10 s, to obtain a biaxially stretched, multi-layered polyamide film of Y/X/Y = 5/5/5 µm. The results of the evaluations are shown in Table 1.

### EXAMPLE 2

In the same manner as in Example 1 except for changing the cast roll temperature to 40 °C and the temperature of the roll for longitudinal stretching to 95 °C, a biaxially stretched, multi-layered polyamide film was obtained. The results of the evaluations are shown in Table 1.

### COMPARATIVE EXAMPLE 1

In the same manner as in Example 1 except for changing the cast roll temperature to 20 °C, a biaxially stretched, multi-layered polyamide film was obtained. During the production, the film adhered to the roll for longitudinal stretching. Therefore, the film appearance was poor the thickness was uneven. The results of the evaluations are shown in Table 1.

### COMPARATIVE EXAMPLE 2

In the same manner as in Example 1 except for changing the temperature of the roll for longitudinal stretching to 60 °C, a biaxially stretched, multi-layered polyamide film was obtained. The adhesion to the roll for longitudinal stretching did not occur during the production. However, the stretching was defective because of a low longitudinal stretching temperature, to make the film appearance poor and the thickness uneven. The results of the evaluations are shown in Table 1.

**Table 1**

| | Examples | | Comparative Examples | |
|---|---|---|---|---|
| | 1 | 2 | 1 | 2 |
| Layered structure | B/A/B | B/A/B | B/A/B | B/A/B |
| Thickness of each layer (µm) | 5/5/5 | 5/5/5 | 5/5/5 | 5/5/5 |
| Total thickness (µm) | 15 | 15 | 15 | 15 |
| Cast roll temperature (°C) | 30 | 40 | 20 | 30 |
| Temperature of roll for | 85 | 95 | 85 | 60 |
| longitudinal stretching (°C) | | | | |
| Temperature of transverse | 100 to 120 | 100 to 120 | 100 to 120 | 90 |
| stretching zone (°C) | | | | |
| Adhesion to roll | none | none | occurred | occurred |
| Stable production | yes | yes | impossible | impossible |
| Evaluation results of film | | | | |
| haze value (%/15 µm) | 3.7 | 3.4 | 3.1 | 3.3 |
| haze value after retorting | 5.6 | 5.9 | 6.3 | 6.6 |
| (%/15 µm) | | | | |
| oxygen permeability | 75.2 | 76.3 | 94.2 | 85.2 |
| (ml/(m²·day·MPa)) | | | | |
| tensile strength (MPa) | 240/270 | 243/265 | 200/220 | 210/220 |
| (MD/TD) | | | | |
| impact puncture strength | 11.3 | 11.0 | 10.8 | 9.3 |
| (kg·cm) | | | | |
| number of pinholes (500 | 3 | 3 | 2 | 5 |
| times flex) | | | | |
| thickness unevenness (µm) | 2 | 2 | 6 | 6 |
| appearance | good | good | poor | poor |

### EXAMPLE 3

In the same manner as in Example 1, a raw multi-layered film (non-stretched laminate film) of Y/X/Y = 50/50/50 µm was produced. The non-stretched laminate film was longitudinally stretched by 3 times by a roll stretching machine (temperature of the low speed heating roll: 85 °C, and temperature of the high speed cooling roll: 50 °C). After holding the film at its edges with a tenter clip, the film was transversely stretched by 3.3 times at 100 to 120 °C in a tenter oven. Thereafter, the film was heat-set at 215 °C for 10 s, to obtain a biaxially stretched, multi-layered polyamide film of Y/X/Y = 5/5/5 µm. The results of the evaluations are shown in Table 2.

### EXAMPLE 4

In the same manner as in Example 3 except for changing the cast roll temperature to 40 °C, the temperature of the low speed heating roll to 90 °C and the temperature of the high speed cooling roll to 40 °C, a biaxially stretched, multi-layered polyamide film was produced. The results of the evaluations are shown in Table 2.

### REFERENCE EXAMPLE 1

In the same manner as in Example 3 except for changing the temperature of the low speed heating roll to 85 °C and the temperature of the high speed cooling roll to 20 °C, a film production was conducted. However, the film width after longitudinal stretching varied between 55 cm and 65 cm. Therefore, the film could not be held stably with a chuck at the entrance of the transverse stretching zone, thereby failing to continuously produce a stretched film. The results of the evaluations are shown in Table 2.

### COMPARATIVE EXAMPLE 3

In the same manner as in Example 3 except for changing the temperature of the heating roll for longitudinal stretching to 60 °C, a biaxially stretched, multi-layered polyamide film was produced. The adhesion to the roll for longitudinal stretching did not occur during the production. However, the stretching was defective because of a low longitudinal stretching temperature, to make the film appearance poor and the thickness uneven. The results of the evaluations are shown in Table 2.

**Table 2**

| | Examples | | Reference Example | Comparative Example |
|---|---|---|---|---|
| | 3 | 4 | 1 | 3 |
| Layered structure | B/A/B | B/A/B | B/A/B | B/A/B |
| Thickness of each layer (µm) | 5/5/5 | 5/5/5 | 5/5/5 | 5/5/5 |
| Total thickness (µm) | 15 | 15 | 15 | 15 |
| Cast roll temperature (°C) | 30 | 40 | 30 | 30 |
| Temperature of heating roll for | 85 | 90 | 85 | 60 |
| longitudinal stretching (°C) | | | | |
| Temperature of cooling roll for | 50 | 40 | 20 | 50 |
| longitudinal stretching (°C) | | | | |
| Temperature of transverse | 100 to 120 | 100 to 120 | 100 to 120 | 90 |
| stretching zone (°C) | | | | |
| variation of film width after | none | none | occurred | none |
| longitudinal stretching | | | | |
| Stable production | yes | yes | impossible | difficult |
| Evaluation results of film | | | | |
| haze value (%/15 µm) | 3.7 | 3.4 | - | 3.3 |
| haze value after retorting | 5.6 | 5.9 | - | 6.6 |
| (%/15 µm) | | | | |
| oxygen permeability | 75.2 | 76.3 | - | 85.2 |
| (ml/(m²·day·MPa)) | | | | |
| tensile strength (MPa) | 240/270 | 243/265 | - | 210/220 |
| (MD/TD) | | | | |
| | | | | |
| impact puncture strength | 11.3 | 11.0 | - | 9.3 |
| (kg·cm) | | | | |
| number of pinholes (500 | 3 | 3 | - | 5 |
| times flex) | | | | |
| | | | | |
| thickness unevenness (µm) | 1.4 | 1.8 | - | 4 |
| appearance | good | good | - | poor |

### EXAMPLE 5

In the same manner as in Example 1, a raw multi-layered film (non-stretched laminate film) of Y/X/Y = 64/64/64 µm was produced. The non-stretched laminate film was longitudinally stretched by 3.2 times by a roll stretching machine (heating roll temperature: 85 °C). After holding the film at its edges with a tenter clip, the film was transversely stretched by 4.0 times at 100 to 120 °C in a tenter oven. Thereafter, the film was heat-set at 215 °C for 10 s, to obtain a biaxially stretched, multi-layered polyamide film of Y/X/Y = 5/5/5 µm. The results of the evaluations are shown in Table 3.

### EXAMPLE 6

In the same manner as in Example 5 except for changing the heating roll temperature to 90 °C, the longitudinal stretching ratio to 3.8 times, and the heat setting time to 6 s, a biaxially stretched, multi-layered polyamide film was produced. The results of the evaluations are shown in Table 3.

### REFERENCE EXAMPLE 2

In the same manner as in Example 5 except for changing the longitudinal stretching ratio to 2.8 times and the transverse stretching ratio to 4.5 times, a biaxially stretched, multi-layered polyamide film was produced. The results of the evaluations are shown in Table 3.

### REFERENCE EXAMPLE 3

In the same manner as in Example 5 except for changing the heat setting time to 20 s, a biaxially stretched, multi-layered polyamide film was produced. The results of the evaluations are shown in Table 3.

**Table 3**

| | Examples | | Reference Examples | |
|---|---|---|---|---|
| | 5 | 6 | 2 | 3 |
| Layered structure | B/A/B | B/A/B | B/A/B | B/A/B |
| Thickness of each layer (µm) | 5/5/5 | 5/5/5 | 5/5/5 | 5/5/5 |
| Total thickness (µm) | 15 | 15 | 15 | 15 |
| Cast roll temperature (°C) | 30 | 40 | 30 | 30 |
| Temperature of roll for longitudinal stretching (°C) | 85 | 90 | 85 | 85 |
| Temperature of transverse stretching zone (°C) | 100 to 120 | 100 to 120 | 100 to 120 | 100 to 120 |
| Stretching ratio (MD × TD) | 3.2 × 4.0 | 3.0 × 3.8 | 2.8 × 4.5 | 3.2 × 4.0 |
| Heat setting temperature (°C) | 215 | 215 | 215 | 215 |
| Heat setting time (s) Evaluation results of film | 10 | 6 | 10 | 20 |
| haze value (%/15 µm) | 3.7 | 3.4 | 2.9 | 6.4 |
| shrinkage upon retort treatment (%) (MD/TD) | 5.0/6.5 | 6.0/7.5 | 10.5/13.5 | 3.0/3.5 |
| oxygen permeability (ml/(m²·day·MPa)) | 75.2 | 76.3 | 73.2 | 76.3 |
| tensile strength (MPa) (MD/TD) | 240/270 | 243/265 | 230/245 | 183/165 |
| impact puncture strength (kg·cm) | 11.3 | 11.0 | 10.3 | 6.0 |
| number of pinholes (1000 times flex) | 0 | 1 | 7 | 9 |

### EXAMPLE 7

In the same manner as in Example 1 except for changing the cast roll temperature to 20 °C, a raw multi-layered film (non-stretched laminate film) of Y/X/Y = 50/50/50 µm was produced. The non-stretched laminate film was longitudinally stretched at 90 °C by 3 times by a roll stretching machine (satin-finished roll). After holding the film at its edges with a tenter clip, the film was transversely stretched by 3.3 times at 100 to 120 °C in a tenter oven. Thereafter, the film was heat-set at 215 °C for 10 s, to obtain a biaxially stretched, multi-layered polyamide film of Y/X/Y = 5/5/5 µm. The results of the evaluations are shown in Table 4.

### EXAMPLE 8

In the same manner as in Example 7 except for using a ceramic-sprayed roll in place of the satin-finished roll, a biaxially stretched, multi-layered polyamide film was produced. The results of the evaluations are shown in Table 4.

### REFERENCE EXAMPLE 4

In the same manner as in Example 7 except for using a hard chromium plated roll in place of the satin-finished roll, a biaxially stretched, multi-layered polyamide film was produced. During the production, the film adhered to the roll for longitudinal stretching. Therefore, the film appearance was poor the thickness was uneven. The results of the evaluations are shown in Table 4.

**Table 4**

| | Examples | | Reference Example |
|---|---|---|---|
| | 7 | 8 | 4 |
| Layered structure | B/A/B | B/A/B | B/A/B |
| Thickness of each layer (µm) | 5/5/5 | 5/5/5 | 5/5/5 |
| Total thickness (µm) | 15 | 15 | 15 |
| Cast roll temperature (°C) | 20 | 20 | 20 |
| Roll for longitudinal stretching | satin-finished | ceramic-sprayed | hard chromium-plated |
| Temperature of roll for longitudinal | 90 | 90 | 90 |
| stretching (°C) | | | |
| Temperature of transverse stretching zone (°C) | 100 to 120 | 100 to 120 | 100 to 120 |
| Adhesion to roll | none | none | occurred |
| Stable production | yes | yes | impossible |
| Evaluation results of film | | | |
| haze value (%/15 µm) | 3.7 | 3.4 | 4.4 |
| haze value after retorting (%/15 µm) | 5.6 | 5.9 | 7.0 |
| oxygen permeability (ml/(m²·day·MPa)) | 75.2 | 76.3 | 86.3 |
| tensile strength (MPa) (MD/TD) | 240/270 | 243/265 | 230/245 |
| impact puncture strength (kg·cm) | 11.3 | 11.0 | 10.0 |
| number of pinholes (500 times flex) | 3 | 3 | 3 |
| thickness unevenness (µm) | 2 | 2 | 6 |
| appearance | good | good | poor |

### EXAMPLE 9

In the same manner as in Example 1, a raw multi-layered film (non-stretched laminate film) of Y/X/Y = 50/50/50 µm was produced. The non-stretched laminate film was longitudinally stretched by 3 times by a roll stretching machine (roll temperature: 85 °C). After holding the film at its edges with a tenter clip, the film was transversely stretched by 3.3 times at 100 to 120 °C in a tenter oven. Thereafter, the film was heat-set at 215 °C for 10 s, to obtain a biaxially stretched, multi-layered polyamide film of Y/X/Y = 5/5/5 µm. The results of the evaluations are shown in Table 5.

### EXAMPLE 10

In the same manner as in Example 9 except for changing the temperature of the roll for longitudinal stretching to 90 °C, the longitudinal stretching ratio to 3.2 times, the transverse stretching ratio to 3.8 times, and the heat setting time to 6 s, a biaxially stretched, multi-layered polyamide film was produced. The results of the evaluations are shown in Table 5.

### REFERENCE EXAMPLE 5

In the same manner as in Example 9 except for heat-setting at 205 °C for 6 s, a biaxially stretched, multi-layered polyamide film was produced. The results of the evaluations are shown in Table 5.

### REFERENCE EXAMPLE 6

In the same manner as in Example 9 except for heat-setting at 215 °C for 20 s, a biaxially stretched, multi-layered polyamide film was produced. The results of the evaluations are shown in Table 5.

**Table 5**

| | Examples | | Reference Examples | |
|---|---|---|---|---|
| | 9 | 10 | 5 | 6 |
| Layered structure | B/A/B | B/A/B | B/A/B | B/A/B |
| Thickness of each layer (µm) | 5/5/5 | 5/5/5 | 5/5/5 | 5/5/5 |
| Total thickness (µm) | 15 | 15 | 15 | 15 |
| Cast roll temperature (°C) | 30 | 40 | 30 | 30 |
| Temperature of heating roll for longitudinal stretching (°C) | 85 | 90 | 85 | 85 |
| Temperature of cooling roll for | 100 to 120 | 100 to 120 | 100 to 120 | 100 to 120 |
| longitudinal stretching (°C) | | | | |
| Stretching ratio (MD × TD) | 3.0 × 3.3 | 3.2 × 3.8 | 3.0 × 3.3 | 3.0 × 3.3 |
| Heat setting temperature (°C) | 215 | 215 | 205 | 215 |
| Heat setting time (s) | 10 | 6 | 6 | 20 |
| Evaluation results of film | | | | |
| haze value (%/15 µm) | 3.7 | 3.4 | 2.9 | 6.4 |
| shrinkage upon retort treatment (%) (MD/TD) | 5.0/6.5 | 6.0/7.5 | 10.5/13.5 | 3.0/3.5 |
| oxygen permeability (ml/(m²·day·MPa)) | 75.2 | 76.3 | 73.2 | 76.3 |
| tensile strength (MPa)(MD/TD) | 240/270 | 243/265 | 280/295 | 183/165 |
| impact puncture strength (kg·cm) | 11.3 | 11.0 | 13.3 | 6.0 |
| number of pinholes (500 times flex) | 3 | 3 | 3 | 6 |

### EXAMPLE 11

From the biaxially stretched, multi-layered polyamide film produced in Example 1, the both edges (10% of total width) which had been held with a clip was cut out to obtain the scraps for reuse. The scraps were crashed in a crasher and fed into a 37 mmφ twin-screwed extruder. The fed scraps were melted at 260 °C and extruded into strands, which were then cut by a pelletizer to obtain recycled pellets. The obtained pellets were mixed with poly(ε-caproamide) (aliphatic polyamide resin Y, "Ube Nylon 1022FDX04 manufactured by Ube Industries, Ltd.) such that the content of nylon MXD6 was 10% by weight. In the same manner as in Example 1 except for using the resultant mixture in place of the aliphatic polyamide resin Y, a biaxially stretched, multi-layered polyamide film was produced. The results of the evaluations are shown in Table 6.

### EXAMPLE 12

The biaxially stretched, multi-layered polyamide film produced in Example 11 was slit for printing and laminating. The remaining films were crashed in a crasher and fed into a 37 mmφ twin-screwed extruder. The fed films were melted at 260 °C and extruded into strands, which were then cut by a pelletizer to obtain recycled pellets. The obtained pellets were mixed with poly(ε-caproamide) (aliphatic polyamide resin Y, "Ube Nylon 1022FDX04 manufactured by Ube Industries, Ltd.) such that the content of nylon MXD6 was 15% by weight. In the same manner as in Example 1 except for using the resultant mixture in place of the aliphatic polyamide resin Y, a biaxially stretched, multi-layered polyamide film was produced. The results of the evaluations are shown in Table 6.

### REFERENCE EXAMPLE 7

In the same manner as in Example 1 except for using a mixture of the recycled pellets obtained in Example 11 and the polyamide resin X, which contained 10% by weight of the recycled pellets, in place of the polyamide resin X, a biaxially stretched, multi-layered polyamide film was produced. The results of the evaluations are shown in Table 7.

**Table 6**

| | Examples | | | |
|---|---|---|---|---|
| | 11 | | 12 | |
| Layered structure | B/A/B | | B/A/B | |
| Thickness of each layer (µm) | 5/5/5 | | 5/5/5 | |
| Total thickness (µm) | 15 | | 15 | |
| Content of MXD6 in layer A (wt %) | 100 | | 100 | |
| Content of MXD6 in layer B (wt %) | 10 | | 15 | |
| Rate of recycling (%) | 15.8 | | 21.8 | |
| Evaluation results of film | | | | |
| haze value (%/15 µm) | 3.7*¹ | 3.4*² | 4.0*¹ | 4.3*² |
| haze value after retorting (%/15 µm) | 5.6*¹ | 5.9*² | 5.9*¹ | 5.5*² |
| oxygen permeability (ml/(m²·day·MPa)) | 75.2*¹ | 76.3*² | 73.4*¹ | 74.7*² |
| tensile strength (MPa) (MD/TD) | 240/270*¹ | 243/265 | 245/273*¹ | 246/270*² |
| impact puncture strength (kg·cm) | 11.3*¹ | 11.0*² | 10.9*¹ | 12.3*² |
| number of pinholes (500 times flex) | 3*¹ | 3*² | 4*¹ | 4*² |

| | | | | |
|---|---|---|---|---|
| *¹: Immediately after starting the reuse. *²: After reaching stable production. | | | | |

**Table 7**

| | Reference Example 7 | |
|---|---|---|
| Layered structure | B/A/B | |
| Thickness of each layer (µm) | 5/5/5 | |
| Total thickness (µm) | 15 | |
| Content of MXD6 in layer A (wt %) | 70.5 | |
| Content of MXD6 in layer B (wt %) | 0 | |
| Rate of recycling (%) | 15.8 | |
| Evaluation results of film | | |
| haze value (%/15 µm) | 3.1*¹ | 3.3*² |
| haze value after retorting (%/15 µm) | 5.6*¹ | 15.6*² |
| oxygen permeability (ml/(m²·day·MPa)) | 127.2*¹ | 155.6*² |
| tensile strength (MPa) (MD/TD) | 220/230*¹ | 180/195*² |
| impact puncture strength (kg·cm) | 10.3*¹ | 8.1*² |
| number of pinholes (500 times flex) | 4*¹ | 10*² |

| | | |
|---|---|---|
| *¹: Immediately after starting the reuse. *²:After reaching stable production. | | |

### EXAMPLE 13

In the same manner as in Example 1 except for changing the cast roll temperature to 20 °C, a raw multi-layered film (non-stretched laminate film) of Y/X/Y = 50/50/50 µm was produced. The non-stretched laminate film was longitudinally stretched by 3 times at a film temperature of 90 °C by heating with an infrared heater of 400 °C. After holding the film at its edges with a tenter clip, the film was transversely stretched by 3.3 times at 100 to 120 °C in a tenter oven. Thereafter, the film was heat-set at 215 °C for 10 s, to obtain a biaxially stretched, multi-layered polyamide film of Y/X/Y = 5/5/5 µm. The results of the evaluations are shown in Table 8.

### EXAMPLE 14

In the same manner as in Example 13 except for heating the film by blowing hot air heated with an electric heater against the film in place of heating with the infrared heater, a biaxially stretched, multi-layered polyamide film was produced. The results of the evaluations are shown in Table 8.

### REFERENCE EXAMPLE 8

In the same manner as in Example 13 except for using a heated, hard chromium-plated roll in place of the infrared heater, a biaxially stretched, multi-layered polyamide film was produced. During the production, the film adhered to the roll for longitudinal stretching. Therefore, the film appearance was poor the thickness was uneven. The results of the evaluations are shown in Table 8.

**Table 8**

| | Examples | | Reference Example |
|---|---|---|---|
| | 13 | 14 | 8 |
| Layered structure | B/A/B | B/A/B | B/A/B |
| Thickness of each layer (µm) | 5/5/5 | 5/5/5 | 5/5/5 |
| Total thickness (µm) | 15 | 15 | 15 |
| Cast roll temperature (°C) | 20 | 20 | 20 |
| Preheating for longitudinal stretching | infrared heater | blowing of hot air | heated, hard chromium-plated roll |
| Film temperature in longitudinal stretching (°C) | 90 | 90 | 90 |
| Temperature of transverse | 100 to 120 | 100 to 120 | 100 to 120 |
| stretching zone (°C) | | | |
| Adhesion to roll | none | none | occurred |
| Stable production | yes | yes | impossible |
| Evaluation results of film | | | |
| haze value (%/15 µm) | 3.7 | 3.4 | 4.4 |
| haze value after retorting (%/15 µm) | 5.6 | 5.9 | 7.0 |
| oxygen permeability (ml/(m²·day·MPa)) | 75.2 | 76.3 | 86.3 |
| tensile strength (MPa) (MD/TD) | 240/270 | 243/265 | 230/245 |
| impact puncture strength (kg·cm) | 11.3 | 11.0 | 10.0 |
| number of pinholes (500 times flex) | 3 | 3 | 3 |
| thickness unevenness (µm) | 2 | 3 | 6 |
| appearance | good | good | poor |

## Claims

1. A method of producing a biaxially stretched, multi-layered polyamide film, which comprises:
a step of cooling a non-stretched laminate film comprising a layer A mainly composed of a polyamide resin X and a layer B mainly composed of an aliphatic polyamide resin Y, the polyamide resin X comprising a diamine constitutional unit containing 70 mol% or more of m-xylylenediamine units and a dicarboxylic acid constitutional unit containing 70 mol% or more of units derived from an α,ω-aliphatic dicarboxylic acid having 6 to 12 carbon atoms; and a step of a successive biaxial stretching in which the cooled non-stretched laminate film is longitudinally stretched by a roll of 80 to 110 °C and then transversely tenter-stretched at 80 to 160 °C;
**characterized by**
cooling the non-stretched laminate film on a cast roll of 30 to 60 °C.

2. The method according to claim 1, wherein the non-stretched laminate film has a layered structure of layer B/layer A/layer B.

3. The method according to claim 1, wherein the longitudinal stretching is conducted by an upstream heating roll of 80 to 110 °C and a cooling roll of 40 to 80 °C which is disposed at a downstream side of the upstream heating roll.

4. The method according to claim 1, wherein the cooled non-stretched laminate film is longitudinally stretched by 3 to 3.3 times the original length using a roll of 80 to 100 °C, successively and transversely stretched at 80 to 120 °C by 3.6 to 4.2 times the original length, and then heat-set at 210 to 220 °C for 4 to 10 s.

5. The method according to claim 1, wherein the longitudinal stretching is conducted by using a satin-finished roll or ceramic-sprayed roll.

6. The method according to claim 1, wherein the cooled non-stretched laminate film is longitudinally stretched by 2.5 to 3.5 times the original length using a roll of 80 to 100 °C, successively and transversely stretched at 80 to 140 °C by 3.0 to 4.0 times the original length, and then heat-set at 210 to 220 °C for 4 to 10 s.

7. The method according to claim 1, wherein the layer B further comprises scraps which are by-produced in the production of the biaxially stretched, multi-layered polyamide film.

8. The method according to claim 7, wherein the content of the polyamide resin X in the layer B is from 3 to 50 % by weight.

9. The method according to claim 1, wherein the non-stretched laminate film is heated in a non-contacting manner when the non-stretched laminate film is longitudinally stretched.

## Patentansprüche

1. Verfahren zur Herstellung eines biaxial gestreckten Mehrschicht-Polyamidfilms, welches umfasst:
einen Schritt des Kühlens eines nicht-gestreckten Laminatfilms, umfassend eine Schicht A, die hauptsächlich aufgebaut ist aus einem Polyamidharz X, und eine Schicht B, die hauptsächlich aufgebaut ist aus einem aliphatischen Polyamidharz Y, wobei das Polyamidharz X eine Diamin-Aufbaueinheit, die 70 Mol.-% oder mehr m-Xylylendiamineinheiten enthält und eine Dicarbonsäure-Aufbaueinheit, die 70 Mol.-% oder mehr von einer α,ω-aliphatischen Dicarbonsäure mit 6 bis 12 Kohlenstoffatomen abgeleiteten Einheit enthält umfasst; und einen Schritt des schrittweisen biaxialen Streckens, wobei der gekühlte nicht-gestreckte Laminatfilm durch eine Walze bei 80 bis 1 10°C longitudinal gestreckt und dann durch einen Spannrahmen bei 80 bis 160°C transversal gestreckt wird;
**dadurch** charakterisiert, dass
der nicht-gestreckte Laminatfilm auf einer Gusswalze bei 30 bis 60°C gekühlt wird.

2. Verfahren nach Anspruch 1 , wobei der nicht-gestreckte Laminatfilm eine Schichtstruktur aus Schicht B/Schicht A/Schicht B aufweist.

3. Verfahren nach Anspruch 1 , wobei das longitudinale Strecken durch eine Stromaufwärts-Heizwalze bei 80 bis 1 10°C und einer Kühlwalze bei 40 bis 80°C durchgeführt wird, die an der Stromabwärts-Seite der Stromaufwärts-Halswalze vorgesehen ist.

4. Verfahren nach Anspruch 1 , wobei der gekühlte nicht-gestreckte Laminatfilm longitudinal um das 3 bis 3,3-fache der ursprünglichen Länge unter Verwendung einer Walze bei 80 bis 100°C und schrittweise transversal bei 80 bis 120°C um das 3,6 bis 4,2-fache der ursprünglichen Menge gestreckt wird, und dann bei 210 bis 220°C während 4 bis 10 Sekunden heiß gehärtet wird.

5. Verfahren nach Anspruch 1, wobei das longitudinale Strecken unter Verwendung einer edelmattierten Walze oder einer mit einer Keramik-Spritzschicht versehenen Walze durchgeführt wird.

6. Verfahren nach Anspruch 1 , wobei der gekühlte nicht-gestreckte Laminatfilm longitudinal um das 2,5 bis 3,5-fache der ursprünglichen Länge unter Verwendung einer Walze bei 80 bis 100°C gestreckt und schrittweise transversal bei 80 bis 140°C um das 3,0 bis 4,0-fache der ursprünglichen Menge gestreckt und dann bei 210 bis 220° während 4 bis 10 Sekunden heiß gehärtet wird.

7. Verfahren nach Anspruch 1, wobei die Schicht B darüber hinaus Abfälle enthält, der bei der Herstellung des biaxial gestreckten Mehrschicht-Polyamidfilms als Nebenprodukt anfallen.

8. Verfahren nach Anspruch 7, wobei der Anteil des Polyamidharzes X in der Schicht B 3 bis 50 Gew.-% beträgt.

9. Verfahren nach Anspruch 1 , wobei der nicht-gestreckte Laminatfilm auf Nicht-Kontakt-Weise erhitzt wird, wenn der nicht-gestreckte Laminatfilm longitudinal gestreckt wird.

## Revendications

1. Procédé de production d'un film polyamide multicouche étiré biaxialement, qui comprend :
une étape de refroidissement d'un film laminé non étiré comprenant une couche A composée principalement d'une résine polyamide X et une couche B composée principalement d'une résine polyamide aliphatique Y, la résine polyamide X comprenant une unité constitutive diamine contenant 70 % en mole ou plus d'unités m-xylylènediamine et une unité constitutive diacide carboxylique contenant 70 % en mole ou plus d'unités dérivées d'un diacide α,ω-aliphatique carboxylique ayant 6 à 12 atomes de carbone ; et
une étape d'étirage biaxial successif dans laquelle le film laminé non étiré refroidi est étiré de manière longitudinale par un rouleau de 80°C à 110°C et ensuite étiré transversalement à 80°C à 160°C ;
**caractérisé par** le refroidissement du film laminé non étiré sur un rouleau de laminage de 30°C à 60°C.

2. Procédé selon la revendication 1, dans lequel le film laminé non étiré possède une structure multicouche de couche B/couche A/Couche B.

3. Procédé selon la revendication 1, dans lequel l'étirage longitudinal est réalisé par un rouleau chauffant amont de 80°C à 110°C et un rouleau de refroidissement de 40°C à 80°C qui est disposé sur un côté aval du rouleau chauffant amont.

4. Procédé selon la revendication 1, dans lequel le film laminé non étiré refroidi est étiré de manière longitudinale de 3 à 3,3 fois la longueur originale en utilisant un rouleau de 80°C à 100°C, successivement et transversalement étiré à 80°C à 120°C de 3,6 à 4,2 fois la longueur originale, et ensuite thermofixé à 210°C à 220°C pendant 4 à 10 secondes.

5. Procédé selon la revendication 1, dans lequel l'étirage longitudinal est réalisé en utilisant un rouleau satiné ou un rouleau revêtu de céramique.

6. Procédé selon la revendication 1, dans lequel le film laminé non étiré refroidi est étiré de manière longitudinale de 2,5 à 3,5 fois la longueur originale en utilisant un rouleau de 80°C à 100°C, successivement et transversalement étiré à 80°C à 140°C de 3,0 à 4,0 fois la longueur originale, et ensuite thermodurci à 210°C à 220°C pendant 4 à 10 secondes.

7. Procédé selon la revendication 1, dans lequel la couche B comprend en outre des débris qui sont des produits secondaires de la production du film polyamide multicouche étiré biaxialement.

8. Procédé selon la revendication 7, dans lequel la teneur en résine polyamide X dans la couche B et de 3 % à 50 % en poids.

9. Procédé selon la revendication 1, dans lequel le film laminé non étiré est chauffé d'une manière sans contact quand le film laminé non étiré est étiré de manière longitudinale.
